# EUROPÄISCHE PATENTSCHRIFT

(11) **EP 2 282 640 B1**
(45) Veröffentlichungstag und Bekanntmachung des Hinweises auf die Patenterteilung: **30.11.2011**
(21) Anmeldenummer: 09745523.2
(22) Anmeldetag: 07.05.2009
(51) Int. Cl.: A21C 9/06, A23P 1/08

(54) **VORRICHTUNG ZUM FORMEN VON LEBENSMITTELN ZU EINER ZYLINDRISCHEN ROLLE**
APPARATUS FOR SHAPING FOOD INTO A CYLINDRICAL ROLL
DISPOSITIF POUR LE FORMAGE DE DENRÉES ALIMENTAIRES EN UN ROULEAU CYLINDRIQUE

(30) Priorität: 16.05.2008 DE 102008023973
(43) Veröffentlichungstag der Anmeldung: 16.02.2011
(73) Patentinhaber: Arnold, Gerhard, 65197 Wiesbaden (DE)
(72) Erfinder: Arnold, Gerhard, 65197 Wiesbaden (DE)
(74) Vertreter: Bungartz, Klaus Peter
(86) Internationale Anmeldenummer: PCT/EP2009/003266
(87) Internationale Veröffentlichungsnummer: WO 2009/138189

(56) Entgegenhaltungen:
- DE-U1- 20 114 084
- DE-U1-202006 004 818
- JP-A- 60 070 055
- US-A- 4 674 967
- US-A- 5 009 905

## Beschreibung

Die Erfindung eine Vorrichtung zum Formen von Lebensmitteln zu einer zylindrischen Rolle mit einem flexiblen Band, das eine Innenseite aufweist, auf die die zu formenden Lebensmittel auflegbar sind.

Derartige Vorrichtungen sind beispielsweise als Sushi-Roller bekannt, die es auch dem ungeübten Hobbykoch ermöglichen sollen, Sushis zuzubereiten. Solche Roller werden aber auch benutzt, um Fleischrollen oder Ähnliches zu bilden.

Bei bekannten Vorrichtungen wird ein Band zunächst glatt auf einen flachen Boden gelegt und dann mit der zu formenden Lebensmittelmasse (Reis oder gehacktes Fleisch) belegt. Dann wird das eine Ende des Bandes parallel zum Boden über das Lebensmittel gezogen, wodurch die Masse sich am Band abwälzend eine Rolle bilden soll. Tatsächlich stellt sich aber nicht zwingend eine Wälzbewegung ein, vielmehr wird die Masse häufig lediglich vor dem Band hergeschoben, ohne eine Rolle zu bilden. Beispielsweise offenbart die US 5,009,905 eine Vorrichtung vom Formen von Sushi bei der das Band aus einer Bambusmatte gebildet ist. Die DE 44 09 511 offenbart eine ähnliche Vorrichtung zum Wickeln von Rouladen mit einer flexiblen Platte.

Die DE 20 2006 004 818 U1 beschreibt eine Einrollmaschine für Lebensmittel mit der Lebensmittel mit einem weiteren Lebensmittel umrollt werden. Diese hat zum einen den Nachteil, dass nur bereits zylindrische Lebensmittel umrollt werden können, die in der Lage sind, in eine Eigenrotation versetzt zu werden. Einzelne, klebrige und kleine Teile wie z.B. Reiskörner, sind hierüber nicht zusammenfass- und rollbar. Ferner ist die Größe der gerollten Teile nicht reproduzierbar sondern von den eingebrachten Lebensmitteln abhängig.

Die Erfindung beruht somit auf der Aufgabe, eine Vorrichtung der genannten Art so weiterzubilden, dass stets sauber geformte Lebensmittelrollen gebildet werden.

Die Aufgabe wird durch eine Vorrichtung zum Formen von Lebensmitteln gelöst, die dadurch gekennzeichnet ist, dass ein Gestell vorgesehen ist, an dem ein Ende des Bandes derart festlegbar ist oder festgelegt ist, dass die Innenseite des freien Endes des Bandes zum Bilden einer Röhre auf die Außenseite des festlegbaren bzw. festgelegten Endes des Bandes gelegt werden kann.

Erfindungsgemäß wurde erkannt, dass die alleinige Ausnutzung des Prinzips des Abrollens zum Herstellen einer Rolle nicht ausreicht, um die gestellte Aufgabe zu lösen. Im Gegenteil hat sich gezeigt, dass man von diesem Prinzip zumindest im Wesentlichen abrücken muss, um zu reproduzierbar zufriedenstellenden Ergebnissen zu gelangen.

Demgemäss ist bei einer besonderen Ausgestaltungsform der erfindungsgemäßen Vorrichtung vorgesehen, dass der Querschnitt der Röhre durch Ziehen an dem freien Ende des Bandes - vorzugsweise in tangentiale Richtung bezogen die durch das Band gebildete Röhre - verringerbar ist.

Insbesondere kann vorgesehen sein, dass das Band derart geführt und festlegbar bzw. festgelegt ist, dass die zu formenden Lebensmittel im Wesentlichen nicht auf der Innenseite des Bandes abrollen sondern vielmehr im Wesentlichen an der Innenseite des Bandes abwälzen und/oder entlang gleiten. Hierbei ist es von Vorteil, wenn das Band aus glattem Material, wie beispielsweise Teflon oder Silikon, hergestellt ist und/oder eine glatte Beschichtung aufweist.

Bei einer besonderen Ausführung weist das Gestell zwei zueinander parallele Wangen auf, die das Band seitlich führen, wobei vorteilhaft vorgesehen sein kann, dass der Abstand der Wangen der Breite des Bandes entspricht und/oder dass das Band - insbesondere während des Verringerns Querschnitts der Röhre - senkrecht zu den Wangen angeordnet ist.

Bei einer vorteilhaften und kompakten Ausführung weist das Gestell einen Boden auf, auf den das Band auflegbar ist. Zusätzlich kann vorgesehen sein, dass der Boden die Wangen miteinander verbindet. Insbesondere um eine gewisse Vorformung der Lebensmittel zu erreichen kann der Boden in der Richtung quer zu den Wangen gerade verlaufen und in Richtung parallel zu den Wangen - insbesondere die Form eines Kreisabschnittes bzw. Rohrabschnittes - gewölbt sein.

Bei einer besonders zuverlässig bedienbaren Ausführung ist vorgesehen, dass das Gestell zumindest eine Führungseinrichtung aufweist, die eine Zurichtung des freien Endes des Bandes definiert. Beispielsweise kann die Führungseinrichtung an den Wangen angeordnet - und/oder Bestandteil der Wangen sein.

Bei einer besonderen Ausführung besitzt das freie Ende des Bandes einen festlegbaren oder festgelegten Steg, wobei der Steg und das Band in vorteilhafter Weise einstückig hergestellt sein können.

Zur Gewährleistung einer besonders sicheren Formung des Lebensmittels ist bei einer Ausführungsform vorgesehen, dass der Steg im festgelegten Zustand die Wangen in Form einer Brücke miteinander verbindet. Beispielsweise kann der obere Rand der Wangen jeweils eine Ausnehmung aufweisen, in die passgenau die seitlichen Enden des Stegs einsetzbar sind.

Um zu verhindern, dass beim Zuziehen der Röhre - also beim Formungsvorgang - Teile des zu Formenden Lebensmittels aus der Röhre austreten ist bei einer vorteilhaften Ausführung der erfindungsgemäßen Vorrichtung vorgesehen, dass das festlegbare Ende des Bandes als scharfe Abstreifkante ausgebildet ist oder dass der Steg eine scharfe Abstreifkante aufweist. Hierdurch wird erreicht, dass die Teile des Lebensmittels, die vor dem Zuziehen im Bereich des freien Endes des Bandes auflagen an der durch freies und festes Ende gebildeten "Naht" der Röhre - ohne auszutreten und ohne Stau - vorbei gleiten.

Zusätzlich oder alternativ kann außerdem in vorteilhafter Weise vorgesehen sein dass im Bereich des festlegbaren Endes des Bandes eine zum freien Ende des Bandes ausgerichtete Anschlagkante vorgesehen ist und/oder der Steg eine zum freien Ende des Bandes ausgerichtete Anschlagkante aufweist. Diese Kante verhindert insbesondere, dass unmittelbar auf das Band aufgelegte Lebensmittelunterlagen, wie Seetangstreifen (beispielsweise ein zum Herstellen von Sushi nötiges Nori-Blatt), beim Zuziehen in ungewollter Weise verrutschen und ganz oder teilweise in das Innere der entstehenden Lebensmittelrolle geraten.

Um einen guten Kontakt zwischen den aufeinandergelegten Enden der Röhre beim Zuziehen zu gewährleisten ist bei einer besonderen Ausführung eine Querstange vorgesehen, mit der das freie Ende des Bandes auf das festgelegte Ende des Bandes gedrückt werden kann. Insbesondere kann vorgesehen sein, dass die Querstange schwenkbar gelagert ist. Beispielsweise kann die Querstange an wenigstens einem schwenkbar an einer der Wangen gelagerten Hebel befestigt sein. Bei einer besonders robusten Ausführung ist die Querstange an zwei auf einer gemeinsamen Achse schwenkbar an den Wangen gelagerten Hebeln befestigt.

Um ein leichtes Zuziehen zu ermöglichen und um Reibung hierbei weitgehend zu minimieren, ist bei einer leicht zu bedienenden Ausführungsform vorgesehen, dass die Querstange um ihre Längsmittelachse drehbar gelagert ist und/oder dass die Querstange ein um ihre Längsmittelachse drehbar gelagertes Rohr aufweist. Hierdurch wird erreicht, dass die Querstange bzw. das Rohr auf Band abrollen kann.

Um eine Sichere Bedienung zu erreichen weist das freie Ende des Bandes bei einer vorteilhaften Ausführung einen Griff auf, wobei der Griff und das Band einstückig hergestellt sein können. Insbesondere kann im Sinne einer komfortablen Bedienbarkeit vorgesehen sein, dass der Griff wieder lösbar mit der Querstange verbindbar ist und/oder der Griff an der Querstange einhakbar ist.

Eine vorteilhafte Ausführung ist derart ausgestaltet, dass die Vorrichtung aus einem Gestell mit zwei parallel verlaufenden Wangen, die über einen Boden miteinander verbunden sind, und einem zwischen den Wangen und senkrecht dazu angeordneten Band besteht, dessen Breite dem Abstand der Wangen entspricht. Das Band besitzt an einem Ende einen an beiden Wangen festlegbaren oder festgelegten Steg, der im festgelegten Zustand die Wangen in Form einer Brücke verbindet. Weiterhin besteht das Band aus einem flexiblen Material, so dass der Endabschnitt, der an das andere Ende anschließt, über den Steg gelegt werden kann, so dass das Band eine Röhre bildet. Außerdem ist das besagte andere Ende des Bandes mit einem Griff versehen. Im Gegensatz zu den bisher bekannten Vorrichtungen bildet das Band eine Röhre, deren Stirnenden beispielsweise von den Wangen abgedeckt sein kann. Zum Formen der Rolle wird der besagte Endabschnitt über den Steg gelegt und durch Ziehen an dem Griff eng anliegend über diesen gezogen, so dass sich die von dem Band gebildete Röhre zuzieht, bis der Querschnitt der Röhre den Volumen der eingebrachten Masse entspricht. Da der Querschnitt der Röhre geschlossen ist, kann die Masse nicht ausweichen, so dass stets eine Rolle gebildet wird. Um den Steg festzulegen, kann der obere Rand der Wangen jeweils eine Ausnehmung aufweisen, in die passgenau die seitlichen Enden des Stegs - vorzugsweise wieder lösbar - einsetzbar sind. Grundsätzlich kann der Steg aber auch stets an den Wangen festgelegt sein, was aber die Beschickung der Vorrichtung mit der zu formenden Masse etwas erschwert.

Damit sich beim Zuziehen des Bandes die sich an der Innenseite des Bandes abwälzende Masse nicht vor dem Steg staut, besitzt dieser eine scharfe Abstreifkante, die das eine Ende des Bandes bildet.

Um eine gewisse Vorformung zu bewerkstelligen, ist vorgesehen, dass der Boden in der Richtung quer zu den Wangen gerade verläuft und in der Richtung parallel zu den Wangen die Form eines Kreisabschnittes aufweist. Der Begriff Kreisabschnitt steht dabei stellvertretend für jede Art von einem bogenförmigen Verlauf, wie z. B. eine Ellipse. Um die Masse gut auf dem Band verteilen zu können, sieht die Erfindung vor, dass der Boden geschlossen ist.

Damit der Endabschnitt des Bandes eng über den Steg gezogen werden kann, besitzt die Vorrichtung eine Querstange, mit der der besagte Endabschnitt des Bandes auf den an den Wangen festgelegten Steg andrückbar ist.

Vorzugsweise ist die Querstange an wenigstens einem schwenkbar an einem der Wangen gelagerten Hebel befestigt.

Für eine gleichmäßige Kraftbeaufschlagung ist die Querstange an zwei auf einer gemeinsamen Achse schwenkbar an den Wangen gelagerten Hebeln befestigt. Querstange und Hebel bilden somit einen Bügel.

Vorzugsweise ist das mit dem Griff versehene Ende des Bandes an der Querstange einhakbar. Bei einer solchen Anordnung wird beim Umlegen des Bügels das mit dem Griff versehene Ende des Bandes mitgenommen und auf den zuvor an den Wangen festgelegten Steg gelegt und kann nun von der Querstange gegen den Steg gedrückt werden.

Um eine Zugkraft auf das Band ausüben zu können, besteht der Griff aus einer verstärkt ausgeführten, senkrecht vom Band abstehenden Griffleiste.

Im Folgenden soll anhand eines Ausführungsbeispiels die Erfindung näher erläutert werden. Dazu zeigen:

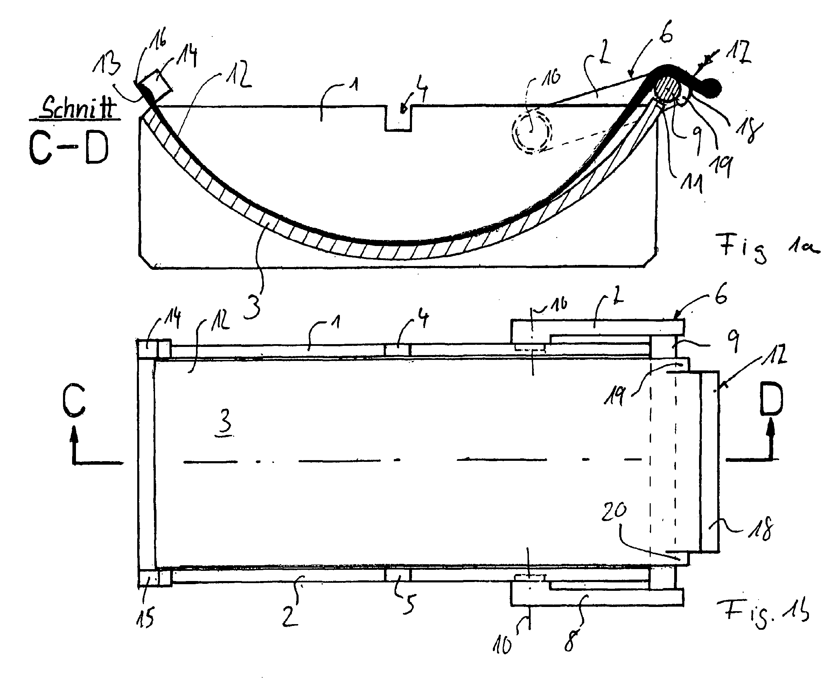

- Fig. 1a: einen Längsschnitt durch eine erfindungsgemäße Vorrichtung,
- Fig. 1 b: eine Draufsicht auf die Darstellung nach Fig. 1a,
- Fig. 2a, 2b bis 4a, 4b: jeweils im Längsschnitt und in der Draufsicht den Fortschritt bei der Formung von Lebensmittelrollen, und
- Fig. 5: eine Detaildarstellung einer Ausbildung des festlegbaren Endes des Bandes und dessen Funktion.

Es wird zunächst auf die Fig. 1 a und 1b Bezug genommen. Die erfindungsgemäße Vorrichtung besteht aus zwei parallel angeordneten Wangen 1, 2, zwischen denen bogenförmig ein geschlossener Boden 3 verläuft. Die Seitenkanten des Bodens 3 sind mit den Wangen 1, 2 verklebt oder verschraubt. Die hochgezogenen Enden des Bodens 3 schließen mit den Oberkanten der Wangen 1, 2 ab, so dass sich eine Wanne mit von den Wangen 1, 2 gebildeten senkrechten Seitenwänden und einem parallel zu den Seitenwänden konkav verlaufenden Boden bildet, der an jeder Stelle quer zu den Seitenwänden gerade verläuft.

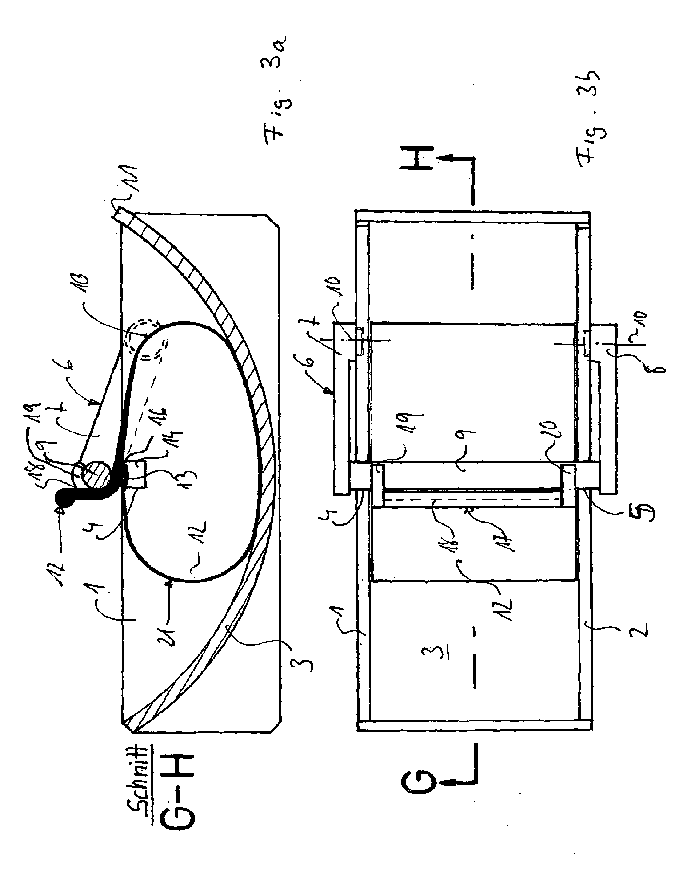

In den Oberkanten der Wangen 1, 2 befindet sich jeweils mittig eine eckige Ausnehmung 4, 5. Des Weiteren ist ein Bügel 6 bestehend aus zwei Hebeln 7, 8 und eine diese verbindende Querstange 9 vorgesehen. Die Hebel 7, 8 befinden sich an den Außenseiten der Wangen 1, 2 und sind an diesen schwenkbar auf einer gemeinsame Achse 10 gelagert. Die Achse 10 befindet sich mittig zwischen den Ausnehmungen 4, 5 und dem einen Ende 11 des Bodens 3. In der Darstellung der Fig. 1a befindet sich damit die Querstange 9 an diesem Ende 11. Wird der Bügel nach innen umgeklappt, so liegt die Querstange 9 über den Ausnehmungen 4, 5 (siehe Fig. 3a).

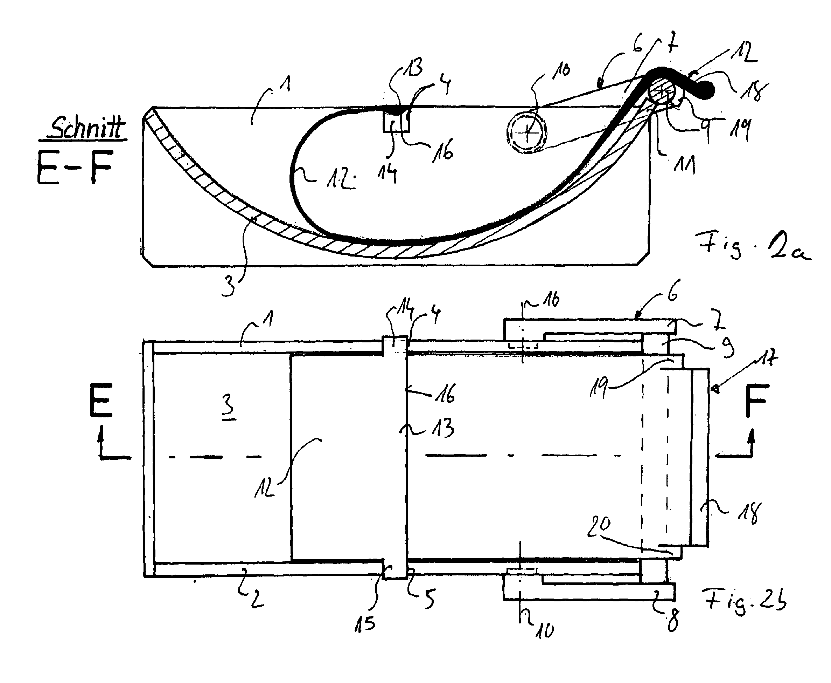

Auf dem Boden 3 der Wanne liegt ein Band 12, das etwas länger ist als der Boden 3, aber genauso breit. An einem Ende des Bandes 12 ist ein Steg 13 in Form eines sich über die Breite des Bandes 12 erstreckenden Wulstes ausgebildet. Die seitlichen Enden des Wulstes gehen über in Ohren 14, 15, die passgenau in die Ausnehmungen 4, 5 einsetzbar sind (siehe Fig. 2a, 2b) Die das Ende des Bandes 12 bildende Kante des Wulstes bildet eine scharfe Abstreifkante 16.

Das andere Ende des Bandes 12 besitzt zur Bildung eines Griffes 17 eine senkrecht von Band 12 abstehende Griffleiste 18, die einstückig mit dem Band 12 ausgeführt ist, aber eine größere Dicke aufweist als diese. Zu beiden Seiten der Griffleiste 18 befinden sich Haken 19, 20, die ebenfalls einstückig mit dem Band 12 ausgeführt sind und die Querstange 9 etwa zur Hälfte umschließen.

Die Vorrichtung wird wie folgt genutzt: Ausgangspunkt ist die Situation gemäß Fig. 1a, 1b. Das Band 12 liegt noch flach auf dem Boden 3. Die zu formende Lebensmittelmasse (nicht dargestellt) wird auf dem Band 12 ausgebreitet. Zur Formung einer Sushi-Rolle wird ggf. zuvor noch ein passend zugeschnittenes Algenblatt auf das Band 12 gelegt.

Als nächstes wird entsprechend der Darstellung gemäß der Fig. 2a, 2b das eine Ende des Bandes 12 nach innen geschlagen, wobei die Ohren 14, 15 in die Ausnehmungen 4, 5 eingesteckt werden, wodurch der Steg 13 an den Wangen 1, 2 festgelegt wird.

Danach wird der Bügel 6 nach innen geschlagen, wobei er das andere Ende des Bandes 12 mitnimmt und über den Steg 13 legt. Gleichzeitig wird die Querstange 9 über den Steg 13 geklappt, so dass durch ein weiteres Niederdrücken des Bügels 6 der sich an den Griff 17 anschließende Endabschnitt des Bandes 12 auf den Steg 13 gedrückt wird. Dadurch bildet das Band 12 eine geschlossene Röhre 21, in der sich die zu formende Masse befindet.

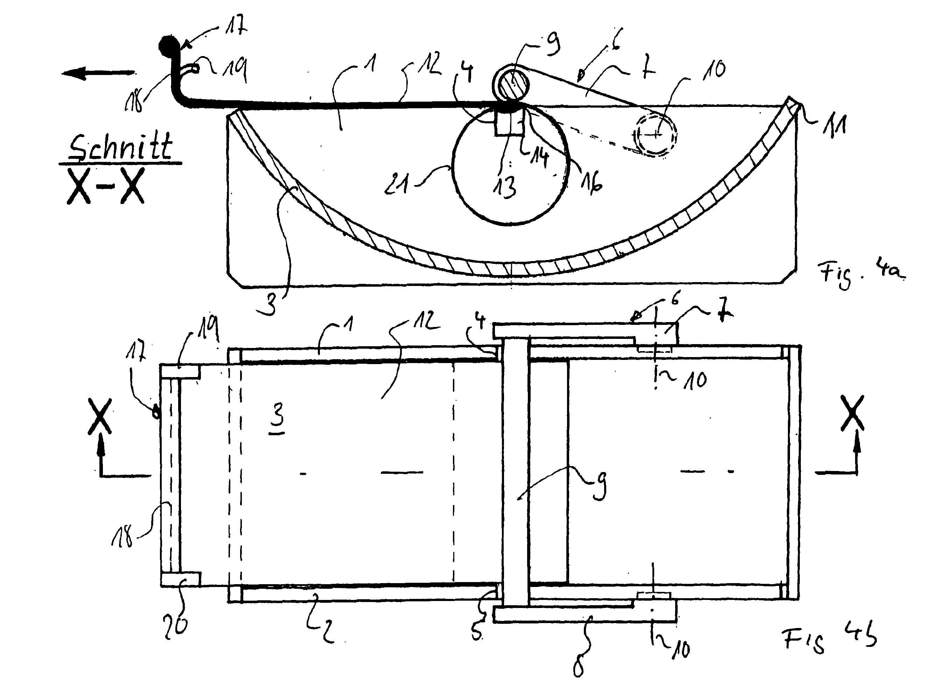

Gemäß Fig. 4a, 4b wird nun das Band 12 durch Ausüben einer Zugkraft auf den Griff 17 zugezogen, wodurch sich die Röhre 21 mehr und mehr schließt. Dabei wird weiterhin ein Druck auf den Bügel 6 ausgeübt, so dass sich die Röhre 21 nicht öffnen kann. Die Wangen 1, 2 verhindern, dass die Masse seitlich aus der Röhre 21 austritt.

Sobald das Band 12 vollständig zusammengezogen worden ist, so dass der Querschnitt der Röhre 21 vollständig mit der Masse ausgefüllt ist, wird der Griff 17 und der Bügel 6 losgelassen, so dass das Band 12 auf Grund seiner Elastizität wieder in eine Lage gemäß den Fig. 2a, 2b zurückspringt. Dies ermöglicht es, die geformte Masse der Vorrichtung zu entnehmen.

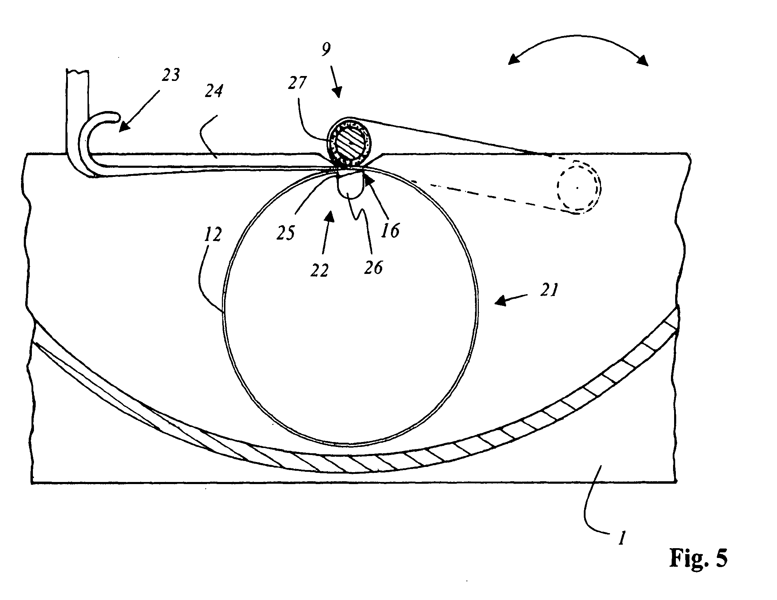

Fig. 5 zeigt eine Detaildarstellung einer Ausbildung des festlegbaren Endes 22 des Bandes 12 und dessen Funktion. Das in Ausnehmungen 26 der Wangen 1, 2 festlegbare Ende 22 des Bandes 12 weist zwei besondere Merkmale auf: Um zu Verhindern, dass beim Zuziehen der Röhre - also durch Ziehen am freien Ende 23 des Bandes 12 - Teile des zu formenden Lebensmittels aus der Röhre austreten, weist das festlegbare Ende 22 des Bandes 12 eine scharfe Abstreifkante 16 auf. Hierdurch wird erreicht, dass Teile des Lebensmittels, an der "Naht" der Röhre - ohne auszutreten und ohne Stau - vorbei gleiten. Darüber hinaus ist im Bereich des festlegbaren Endes 22 des Bandes 12 eine zum freien Ende 23 des Bandes 12 ausgerichtete Anschlagkante 25 vorgesehen. Diese Anschlagkante 25 verhindert, dass unmittelbar auf das Band aufgelegte Lebensmittelunterlagen, wie Seetangstreifen (Nori-Blatt), beim Zuziehen in ungewollter Weise verrutschen und ganz oder teilweise in das Innere der entstehenden Lebensmittelrolle geraten. Vielmehr wird die Kante der Lebensmittelunterlage (beispielsweise eine Kante eines Nori-Blattes, wie es bei der Herstellung von Sushi-Rollen verwendet wird) beim Zuziehvorgang an die Anschlagkante 25 gedrückt und kann nicht verrutschen und daher auch nicht ins Innere des zu formenden Lebensmittels gelangen. Um - insbesondere während des gesamten Zuziehvorganges einen guten Verschluss der "Naht" der Röhre zu erreichen, wird zunächst das freie Ende 23 während des Zuziehvorganges der mittlere Bereich des Bandes 12 mit Hilfe einer Querstange 9, die - insbesondere zur Vermeidung von Reibung - ein um ihre Längsmittelachse drehbar gelagertes Rohr 27 aufweist. Die Querstange ist - wie durch den Doppelpfeil angedeutet - mit Hilfe von Hebeln schwenkbar an den Wangen 1, 2 angebracht. Die oberen Kanten Wangen 1, 2 sind so weit nach oben gezogen, dass diese als seitliche Führungseinrichtung 24 fungieren, indem sie eine Zugrichtung für das freie Ende des Bandes definieren.

### Bezugszeichenliste

- 1: Wange
- 2: Wange
- 3: Boden
- 4: Ausnehmung
- 5: Ausnehmung
- 6: Bügel
- 7: Hebel
- 8: Hebel
- 9: Querstange
- 10: Achse
- 11: Ende
- 12: Band
- 13: Steg
- 14: Ohr
- 15: Ohr
- 16: scharfe Abstreifkante
- 17: Griff
- 18: Griffleiste
- 19: Haken
- 20: Haken
- 21: Röhre
- 22: festlegbares Ende des Bandes 12
- 23: freies Ende des Bandes 12
- 24: Führungseinrichtung
- 25: Anschlagkante
- 26: Ausnehmungen
- 27: Rohr

## Patentansprüche

1. Vorrichtung zum Formen von Lebensmitteln zu einer zylindrischen Rolle mit einem flexiblen Band (12), das eine Innenseite aufweist, auf die die zu formenden Lebensmittel auflegbar sind, **dadurch gekennzeichnet, dass**
ein Gestell vorgesehen ist, an dem ein Ende (22) des Bandes (12) derart festlegbar ist oder festgelegt ist, dass die Innenseite des freien Endes (23) des Bandes (12) zum Bilden einer Röhre (21) auf die Außenseite des festlegbaren bzw. festgelegten Endes (22) des Bandes (12) gelegt werden kann.

2. Vorrichtung nach Anspruch 1, **dadurch gekennzeichnet, dass** der Querschnitt der Röhre (21) durch Ziehen, insbesondere in einer zur Röhre (21) tangentialen Richtung, an dem freien Ende (23) des Bandes (12) verringerbar ist.

3. Vorrichtung nach einem der Ansprüche 1 oder 2, **dadurch gekennzeichnet, dass** das Band (12) derart geführt und festlegbar bzw. festgelegt ist, dass die zu formenden Lebensmittel im Wesentlichen nicht auf der Innenseite des Bandes (12) abrollen.

4. Vorrichtung nach einem der Ansprüche 1 bis 3, **dadurch gekennzeichnet, dass** im Bereich des festlegbaren Endes (22) des Bandes (12) eine zum freien Ende (23) des Bandes (12) ausgerichtete Anschlagkante (25) vorgesehen ist und/oder der Steg (13) eine zum freien Ende (23) des Bandes (12) ausgerichtete Anschlagkante (25) aufweist.

5. Vorrichtung nach einem der Ansprüche 1 bis 4, **dadurch gekennzeichnet, dass** das freie Ende (23) des Bandes (12) einen festlegbaren oder festgelegten Steg (13) besitzt.

6. Vorrichtung nach Anspruch 5, **dadurch gekennzeichnet, dass** das festlegbare Ende (22) des Bandes (12) als scharfe Abstreifkante (16) ausgebildet ist oder dass der Steg (13) eine scharfe Abstreifkante (16) aufweist.

7. Vorrichtung nach einem der Ansprüche 1 bis 6, **dadurch gekennzeichnet, dass** das Gestell zwei zueinander parallele Wangen (1,2) aufweist, die das Band (12) seitlich führen, wobei der Abstand der Wangen (1,2) insbesondere der Breite des Bandes (12) entspricht.

8. Vorrichtung nach einem der Anspruch 7, **dadurch gekennzeichnet, dass** das Band (12) - insbesondere während des Verringerns des Querschnitts der Röhre (21) - senkrecht zu den Wangen (1,2) angeordnet ist.

9. Vorrichtung nach einem der Ansprüche 7 oder 8, **dadurch gekennzeichnet, dass** das Gestell einen, die Wangen (1,2) miteinander verbindenden Boden (3) aufweist, auf den das Band (12) auflegbar ist.

10. Vorrichtung nach Anspruch 9, **dadurch gekennzeichnet, dass** der Boden (3) in der Richtung quer zu den Wangen (1,2) gerade verläuft und in Richtung parallel zu den Wangen (1,2) gewölbt ist, insbesondere die Form eines Kreisabschnittes, aufweist.

11. Vorrichtung nach einem der Ansprüche 5 bis 9, **dadurch gekennzeichnet, dass** das Gestell zumindest eine Führungseinrichtung (24) aufweist, die eine Zurichtung des freien Endes (23) des Bandes (12) definiert und an den Wangen (1,2) angeordnet ist und/oder Bestandteil der Wangen (1,2) ist.

12. Vorrichtung nach einem der Ansprüche 5 bis 10, **dadurch gekennzeichnet, dass** das freie Ende (23) des Bandes (12) einen festlegbaren oder festgelegten Steg (13) besitzt, wobei der Steg (13) und das Band (12) einstückig hergestellt sind und der Steg (13) im festgelegten Zustand die Wangen (1,2) in Form einer Brücke miteinander verbindet und der obere Rand der Wangen (1,2) jeweils eine Ausnehmung (26) aufweist, in die passgenau die seitlichen Enden des Stegs (13) einsetzbar sind.

13. Vorrichtung nach einem der Ansprüche 5 bis 12, **dadurch gekennzeichnet, dass** die Vorrichtung eine insbesondere schwenkbar gelagerte Querstange (9) aufweist, mit der das freie Ende (23) des Bandes (12) auf das festgelegte Ende (22) des Bandes (12) drückbar ist, wobei die Querstange (9) an wenigstens einem schwenkbar an einer der Wangen (1,2) gelagerten Hebel, bevorzugt an zwei um ein gemeinsame Achse schwenkbar an den Wangen (1,2) gelagerten Hebeln (8) befestigt ist.

14. Vorrichtung nach Anspruch 13, **dadurch gekennzeichnet, dass** die Querstange (9) um ihre Längsmittelachse drehbar gelagert ist und/oder dass die Querstange (9) ein um ihre Längsmittelachse drehbar gelagertes Rohr (27) aufweist.

15. Vorrichtung nach einem der Ansprüche 1 bis 14, **dadurch gekennzeichnet, dass** das freie Ende des Bandes einen Griff aufweist, wobei der Griff und das Band insbesondere einstückig hergestellt sind und wieder lösbar mit der Querstange verbindbar ist und/oder an der Querstange einhakbar ist.

## Claims

1. An apparatus for shaping food into a cylindrical roll comprising a flexible band (12) that has an inner side on which the food to be shaped can be placed, **characterised in that** a frame is provided on which one end (22) of the band (12) can be fixed or id fixed in such a manner that the inner side of the free end (23) of the band (12) can be placed on the outer side of the fixable or fixed end (22) of the band (12) to form a tube (21).

2. The apparatus according to claim 1, **characterised in that** the cross-section of the tube (21) can be reduced by pulling, in particular in a direction tangential to the tube (21), at the free end (23) of the band (12).

3. The apparatus according to any one of claims 1 or 2, **characterised in that** the band (12) is guided and can be fixed or is fixed in such a manner that the food to be shaped substantially does not unroll on the inner side of the band (12).

4. The apparatus according to any one of claims 1 to 3, **characterised in that** in the area of the fixable end (22) of the band (12) a stop edge (25) aligned towards the free end (23) of the band (12) is provided and/or the web (13) has a stop edge (25) aligned towards the free end (23) of the band (12).

5. The apparatus according to any one of claims 1 to 4, **characterised in that** the free end (23) of the band (12) has a fixable or fixed web (13).

6. The apparatus according to claim 5, **characterised in that** the fixable end (22) of the band (12) is formed as a sharp scraping edge (16) or that the web (13) comprises a sharp scraping edge (16).

7. The apparatus according to any one of claims 1 to 6, **characterised in that** the frame comprises two parallel cheeks (1, 2) which guide the band (12) laterally, wherein the spacing of the cheeks (1, 2) in particular corresponds to the width of the band (12).

8. The apparatus according to one of claim 7, **characterised in that** the band (12) - in particular during the reduction in the cross-section of the tube (21) - is disposed perpendicular to the cheeks (1, 2).

9. The apparatus according to any one of claims 7 or 8, **characterised in that** the frame has one base (3) which interconnects the cheeks (1, 2), on which the band (12) can be placed.

10. The apparatus according to claim 9, **characterised in that** the base (3) runs straight in the direction transverse to the cheeks (1, 2) and is curved in the direction parallel to the cheeks (1, 2), in particular has the shape of a circular segment.

11. The apparatus according to any one of claims 5 to 9, **characterised in that** the frame has at least one guide device (24) which defines an adjustment of the free end (23) of the band (12) and is disposed on the cheeks (1, 2) and/or is part of the cheeks (1, 2).

12. The apparatus according to any one of claims 5 to 10, **characterised in that** the free end (23) of the band (12) has a fixable or fixed web (13), wherein the web (13) and the band (12) are manufactured in one piece and in the fixed state the web (13) interconnects the cheeks (1, 2) in the form of a bridge and the upper edge of each cheek (1, 2) has a recess (26) into which the lateral ends of the web (13) can be inserted in a precisely fitting manner.

13. The apparatus according to any one of claims 5 to 12, **characterised in that** the apparatus comprises an in particular pivotably mounted cross bar (9) by which means the free end (23) of the band (12) can be pressed onto the fixed end (22) of the band (12), wherein the cross bar (9) is fixed on at least one lever mounted pivotably on one of the cheeks (1, 2), preferably on two levers (8) mounted pivotably about a common axis on the cheeks (1, 2).

14. The apparatus according to claim 13, **characterised in that** the cross bar (9) is mounted rotatably about a longitudinal central axis and/or that the cross bar (9) has a tube (27) mounted rotatably about its longitudinal central axis.

15. The apparatus according to any one of claims 1 to 14, **characterised in that** the free end of the band has a handle, wherein the handle and the band are manufactured in particular in one piece and can be connected to the cross bar in a re-detachable manner and/or can be hooked on the cross bar.

## Revendications

1. Dispositif de moulage de produits alimentaires en un rouleau cylindrique, avec une bande (12) flexible qui présente une face intérieure sur laquelle les produits alimentaires à mouler peuvent être posés, **caractérisé en ce qu'**il est prévu un châssis sur lequel une extrémité (22) de la bande (12) peut être immobilisée ou est immobilisée de sorte que la face intérieure de l'extrémité libre (23) de la bande (12) puisse être posée sur la face extérieure de l'extrémité (22) qui immobilisable ou immobilisée de la bande (12), pour former un tube (21).

2. Dispositif selon la revendication 1, **caractérisé en ce que** la section transversale du tube (21) peut être rétrécie sur l'extrémité libre (23) de la bande (12) en tirant la bande (12), notamment dans une direction tangentielle par rapport au tube (21).

3. Dispositif selon l'une quelconque des revendications 1 ou 2, **caractérisé en ce que** la bande (12) est guidée et immobilisable ou immobilisée de sorte que les produits alimentaires à mouler ne se déroulent sensiblement pas sur la face intérieure de la bande (12).

4. Dispositif selon l'une quelconque des revendications 1 à 3, **caractérisé en ce que** dans la zone de l'extrémité (22) immobilisable de la bande (12) est prévue une arête de butée (25) orientée vers l'extrémité libre (23) de la bande (12) et/ou **en ce que** le listel (13) comporte une arête de butée (25) orientée vers l'extrémité libre (23) de la bande (12).

5. Dispositif selon l'une quelconque des revendications 1 à 4, **caractérisé en ce que** l'extrémité libre (23) de la bande (12) comporte un listel (13) immobilisable ou immobilisé.

6. Dispositif selon la revendication 5, **caractérisé en ce que** l'extrémité immobilisable (22) de la bande (12) est conçue en tant qu'arête vive racleuse (16) ou **en ce que** le listel (13) comporte une arête vive racleuse (16).

7. Dispositif selon l'une quelconque des revendications 1 à 6, **caractérisé en ce que** le châssis comporte deux joues (1, 2) parallèles l'une à l'autre qui guident latéralement la bande (12), l'écart entre les joues (1,2) correspondant notamment à la largeur de la bande (12).

8. Dispositif selon la revendication 7, **caractérisé en ce que** (notamment pendant le rétrécissement de la section transversale du tube (21)), la bande (12) est disposée à la perpendiculaire des joues (1,2).

9. Dispositif selon l'une quelconque des revendications 7 ou 8, **caractérisé en ce que** le châssis comporte un fond (3) reliant entre elles les joues (1,2) sur lequel la bande (12) peut se poser.

10. Dispositif selon la revendication 9, **caractérisé en ce que** dans la direction à la transversale des joues (1, 2), le fond (3) s'étend de façon rectiligne et dans la direction à la parallèle des joues (1,2), il est incurvé et présente notamment la forme d'un segment de cercle.

11. Dispositif selon l'une quelconque des revendications 5 à 9, **caractérisé en ce que** le châssis comporte au moins un système de guidage (24) qui définit une direction de l'extrémité libre (23) de la bande (12) et qui est disposé sur les joues (1,2) et/ou qui est un élément des joues (1,2).

12. Dispositif selon l'une quelconque des revendications 5 à 10, **caractérisé en ce que** l'extrémité libre (23) de la bande (12) comporte un listel (13) immobilisable ou immobilisé, le listel (13) et la bande (12) étant fabriqués en un seul élément et à l'état immobilisé, le listel (13) reliant l'une à l'autre les joues (1,2) sous la forme d'un pont et le bord supérieur des joues (1,2) comportant chacun un évidement (26) dans lequel les extrémités latérales du listel (13) sont insérables en étant parfaitement ajustées.

13. Dispositif selon l'une quelconque des revendications 5 à 12, **caractérisé en ce que** le dispositif comporte une barre transversale (9) logée notamment de façon pivotante, à l'aide de laquelle l'extrémité libre (23) de la bande (12) peut être pressée sur l'extrémité immobilisée (22) de la bande (12), la barre transversale (9) étant fixée sur au moins un levier logé de façon pivotante sur l'une des joues (1,2), de préférence sur deux leviers (8) logés de façon pivotante sur les joues (1,2) autour d'un axe commun.

14. Dispositif selon la revendication 13, **caractérisé en ce que** la barre transversale (9) est logée de façon rotative autour de son axe médian longitudinal et/ou en ce que la barre transversale (9) comporte un tuyau (27) logé de façon rotative autour de son axe médian longitudinal.

15. Dispositif selon l'une quelconque des revendications 1 à 14, **caractérisé en ce que** l'extrémité libre de la bande comporte une poignée, la poignée et la bande étant fabriquées notamment en un seul élément et pouvant être reliées de façon amovible avec la barre transversale et/ou pouvant être accrochées dans la barre transversale.
